# EUROPÄISCHE PATENTANMELDUNG

(11) **EP 2 980 481 A1**
(43) Veröffentlichungstag der Anmeldung: **03.02.2016**
(21) Anmeldenummer: 15176991.6
(22) Anmeldetag: 16.07.2015
(51) Int. Cl.: F23R 3/00, F23R 3/60, F23Q 3/00, F02C 7/266

(54) **FLUGGASTURBINE MIT EINER DICHTUNG ZUR ABDICHTUNG EINER ZÜNDKERZE AN DER BRENNKAMMERWAND EINER GASTURBINE**

(30) Priorität: 28.07.2014 DE 102014214775
(71) Anmelder: Rolls-Royce Deutschland Ltd & Co KG, 15827 Blankenfelde-Mahlow (DE)
(72) Erfinder: PENZ, Stefan, 16356 Werneuchen (DE)
(74) Vertreter: Hoefer & Partner Patentanwälte mbB

(57) **Zusammenfassung**

Die Erfindung bezieht sich auf eine Dichtungsanordnung einer Zündkerze 25 einer Brennkammer 15 einer Gasturbine, mit einer Zündkerze 25, welche durch eine Ausnehmung 31 einer Brennkammerwand 29, 30 angeordnet ist, mit zumindest einem Dichtring 32, durch welchen die Zündkerze 25 ragt und welche gegen einen dem Brennkammerinnenraum 33 abgewandten Randbereich der Ausnehmung 31 dichtend anliegt, dadurch gekennzeichnet, dass der Dichtring 32 in Form einer flachen, ringförmigen, flexiblen Scheibe ausgebildet ist.

## Beschreibung

Die Erfindung bezieht sich auf eine Dichtungsanordnung gemäß dem Oberbegriff des Anspruchs 1.

Im Einzelnen bezieht sich die Erfindung auf eine Dichtungsanordnung einer Zündkerze oder einer Messsonde oder eines ähnlichen Bauteils, welches durch eine Brennkammerwand einer Gasturbine geführt ist. Im Nachfolgenden wird stets der Begriff Zündkerze verwendet, dies ist jedoch nicht einschränkend zu verstehen.

Die erfindungsgemäße Dichtungsanordnung umfasst zumindest einen Dichtring, durch welchen die Zündkerze oder die Messsonde ragt und welche gegen einen dem Brennkammerinnenraum abgewandten Randbereich der Ausnehmung dichtend anliegt. Eine Ausgestaltung dieser Art ist beispielsweise aus der US 2005/0072163 A1 vorbekannt. Aus dem Stand der Technik ist es bekannt, dass eine Zündkerze am Brennkammergehäuse befestigt ist und durch die einwandig oder doppelwandig ausgebildete Brennkammerwand der Brennkammer ragt. Aufgrund von Toleranzen und relativen Bewegungen durch Druck- und Wärmefluss ist zwischen dem Randbereich einer Ausnehmung der Brennkammerwand und der Zündkerze ein Spalt einzuhalten, um einen direkten Kontakt und damit Beschädigungen der Bauteile zu vermeiden. Durch diesen Spalt gelangt Luft unkontrolliert in die Brennkammer und beeinflusst die Verbrennung sowie die Kühlung der Brennkammerwand.

Zum Abdichten des Ringspaltes sind aus dem Stand der Technik unterschiedliche Lösungen vorbekannt. Hierzu wird auf die US 2011/0120132 A1, GB 2 445 576 A, US 2003/0163995 A1 und die US 2013/0055716 A1 verwiesen. Es ist somit bekannt, rohrartige Konstruktionen vorzusehen, welche großen Bauraum erfordern und komplizierte Strukturen haben. Dies bedingt sowohl hohe Fertigungskosten für die Dichtungsanordnung selbst, als auch einen hohen Montageaufwand. Insgesamt sind vielfach röhrenartige, turmartige Konstruktionen vorbekannt, die entweder an der Zündkerze selbst befestigt sind oder an der inneren Brennkammerwand (Schindel und Schindelträger) geklemmt sind. Diese Konstruktionen führen insbesondere bei komplexen Geometrien der Brennkammerwand nicht stets zu einer guten Abdichtung und können an bestimmten Stellen der Brennkammerwand nicht ohne Weiteres eingesetzt werden.

Wird auf eine Abdichtung der Eintrittsöffnung für die Zündkerze verzichtet, so wird Luft um die Zündkerze herum in die Brennkammer geleitet. Aufgrund der geänderten Geometrie im Vergleich zu den sonstigen Mischluftlöchern in der Brennkammer ergibt sich ein unterschiedlicher Luftstrom. Dieser beeinflusst die Verbrennung sowie die Kühlung der Brennkammerinnenwand in diesem Bereich. Durch geänderte Temperaturverteilungen ergeben sich lokale Überhitzungen oder ein erhöhter Kühlluftbedarf.

Bei der Verwendung der oben genannten röhrenartigen Ausgestaltungen ergibt sich zusätzlich zu dem erhöhten Fertigungsaufwand und den höheren Kosten der Nachteil, dass der Luftstrom um die Brennkammerwand lokal beeinflusst wird. Dies beeinflusst auch den Luftstrom durch die in der Nähe der Zündkerze befindlichen Mischluftöffnungen und Kühlluftbohrungen. Als Folge hieraus ergibt sich eine unterschiedliche Verbrennung und Kühlung im Bereich sowohl des Zündkerzeneintritts als auch der benachbarten Mischluftlöcher. Dies führt, wie erwähnt, zu lokalen Überhitzungen und erhöhtem Kühlluftbedarf.

Hinsichtlich des erhöhten Fertigungsaufwandes ist zu berücksichtigen, dass bei beengten Platzverhältnissen die röhrenartigen Abdichtungen von der Brennkammerinnenseite aus befestigt werden müssen, beispielsweise durch Schweißen. Dies erfordert eine manuelle Nacharbeit der Innenseite der Brennkammerwand, um eine ausreichende Abdichtung sicherzustellen.

Bei einer Verwendung eines beweglichen Dichtrings zwischen der äußeren und der inneren Brennkammerwand, welcher in den Zwischenraum eingeklemmt wird, so wie dies beispielsweise die US 2013/0055716 A1 zeigt, wird die Kühlung der Brennkammerwand und insbesondere der Brennkammerinnenseite beeinflusst. Auch hierbei kann es zu lokalen Überhitzungen bzw. zu erhöhtem Kühlluftbedarf kommen. Die Kühlluftbohrungen in diesem Bereich können nicht in optimaler Lage und Anordnung, insbesondere in Richtung der Hauptströmung, eingebracht werden.

Der Erfindung liegt die Aufgabe zugrunde, eine Dichtungsanordnung der eingangs genannten Art zu schaffen, welche bei einfachem Aufbau und einfacher, kostengünstiger Herstellbarkeit die Nachteile des Standes der Technik vermeidet und zu einer optimierten Abdichtung führt.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass der Dichtring in Form einer flachen, ringförmigen, flexiblen Scheibe ausgebildet ist. Diese ist bevorzugterweise als Blechbauteil ausgebildet.

Ein wesentlicher Vorteil der erfindungsgemäßen Ausgestaltung liegt darin, dass sich ein erheblich reduzierter Fertigungsaufwand ergibt. Weiterhin werden sowohl die Kühlluftführung als auch die Mischluftführung nur minimal beeinflusst, da die erfindungsgemäße Dichtungsanordnung einen sehr geringen Bauraum erfordert.

Der erfindungsgemäß vorgesehene Dichtring kann, da es sich um ein flaches, leichtes Bauteil handelt, durch den Druckunterschied zwischen der Außenseite der Brennkammerwand und der Innenseite der Brennkammerwand gegen die Brennkammerwand angelegt und dichtend gehalten werden. Es ist nicht erforderlich, zusätzliche Maßnahmen zu ergreifen, um den Dichtring gegen die Brennkammerwand vorzuspannen oder zu fixieren. Im Betrieb der Gasturbine liegt somit der Dichtring an der Außenseite der Brennkammerwand an und reduziert hierdurch den Leckageluftstrom.

In besonders günstiger Ausgestaltung der Erfindung ist der Dichtring mit radialen, bezogen auf seine mittige Ausnehmung zur Durchführung der Zündkerze, Schlitzen versehen. Diese Schlitze führen zu einer erheblichen Erhöhung der Flexibilität des Dichtrings, sodass dieser auch auf nicht-ebenen Bereichen der Brennkammerwand dichtend aufliegt.

In besonders günstiger Weiterbildung der Erfindung ist vorgesehen, dass mehrere Dichtringe übereinanderliegend vorgesehen sind. Diese mehreren Dichtringe können bevorzugterweise miteinander verbunden werden, beispielsweise über eine Punktschweißung. Weiterhin kann es günstig sein, die Schlitze der mehreren Dichtringe in Umfangsrichtung, bezogen auf den Dichtring, zueinander versetzt anzuordnen. Hierdurch ergibt sich eine besonders gute Abdichtung.

Zündkerzen sind oft im unteren Bereich des Triebwerks angeordnet. Der Dichtring würde somit insbesondere im Stillstand der Fluggasturbine am Brennkammergehäuse anliegen. Um den Dichtring mechanisch in die Nähe der Brennkammerwand zu bringen und um sicherzustellen, dass beim Betrieb der Gasturbine der Dichtring durch die Druckdifferenz gegen die Brennkammerwand angedrückt wird, ist es besonders günstig, wenn die Zündkerze mit zumindest einem den Dichtring abstützenden Anlageelement versehen ist. Das Anlageelement kann als Sicherungsring oder als Adapter ausgebildet sein. In beiden Fällen kann das Anlageelement direkt an der Zündkerze vorgesehen sein. Es ist auch möglich, das Anlageelement direkt bei der Herstellung des Adapters bzw. der Zündkerze auszubilden oder Anlageelemente oder Distanzstücke an der Zündkerze vorzusehen, beispielsweise durch Anschweißen.

In besonders günstiger Weiterbildung der Erfindung ist vorgesehen, dass der Dichtring durch einen rohrförmigen, verlängert ausgebildeten Adapter gesichert wird. Dieser wird außerhalb des Dichtrings positioniert. Dabei kann die Zündkerze durch den verlängerten Adapter durchgeführt werden. Es sind somit keine Änderungen an der Zündkerze selbst erforderlich. Der zusätzliche, rohrförmige Adapter stützt sich dabei an seinem, bezogen auf die Triebwerksmittelachse, radial äußeren Bereich gegen den Adapter ab, mit dem die Zündkerze selbst an dem Brennkammergehäuse befestigt ist. Es wird somit in betriebssicherer Weise sichergestellt, dass der Dichtring oder die mehreren Dichtringe exakt positioniert sind.

Erfindungsgemäß ergibt sich somit ein einfacher, kostengünstiger Aufbau der gesamten Dichtungsanordnung. Diese übt wenig Einfluss auf die Kühlung in der Nähe der Mischluftöffnungen aus und zeichnet sich insbesondere durch eine geringe Bauhöhe aus.

Im Folgenden wird die Erfindung anhand von Ausführungsbeispielen in Verbindung mit der Zeichnung beschrieben. Dabei zeigt:
- Fig. 1: eine schematische Darstellung eines Gasturbinentriebwerks gemäß der vorliegenden Erfindung,
- Fig. 2 - 4: vereinfachte Seiten-Schnittansichten von Ausführungsbeispielen der erfindungsgemäßen Dichtungsanordnung,
- Fig. 5: eine Draufsicht auf ein Ausführungsbeispiel des erfindungsgemäßen Dichtrings,
- Fig. 6: eine perspektivische Darstellung zweier übereinander gelegter Dichtringe, und
- Fig. 7: ein abgewandeltes Ausführungsbeispiel analog Fig. 2.

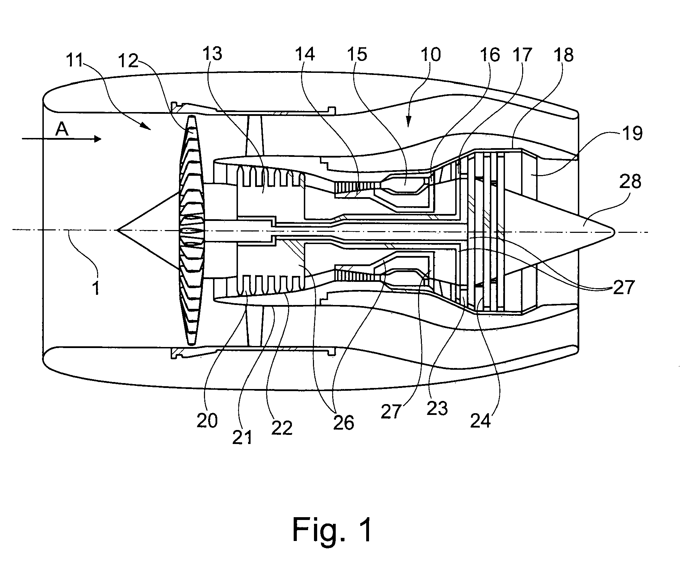

Das Gasturbinentriebwerk 10 gemäß Fig. 1 ist ein allgemein dargestelltes Beispiel einer Turbomaschine, bei der die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, eine Brennkammer 15, eine Hochdruckturbine 16, eine Mitteldruckturbine 17 und eine Niederdruckturbine 18 sowie eine Abgasdüse 19, die sämtlich um eine zentrale Triebwerksmittelachse 1 angeordnet sind.

Der Mitteldruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksmittelachse 1.

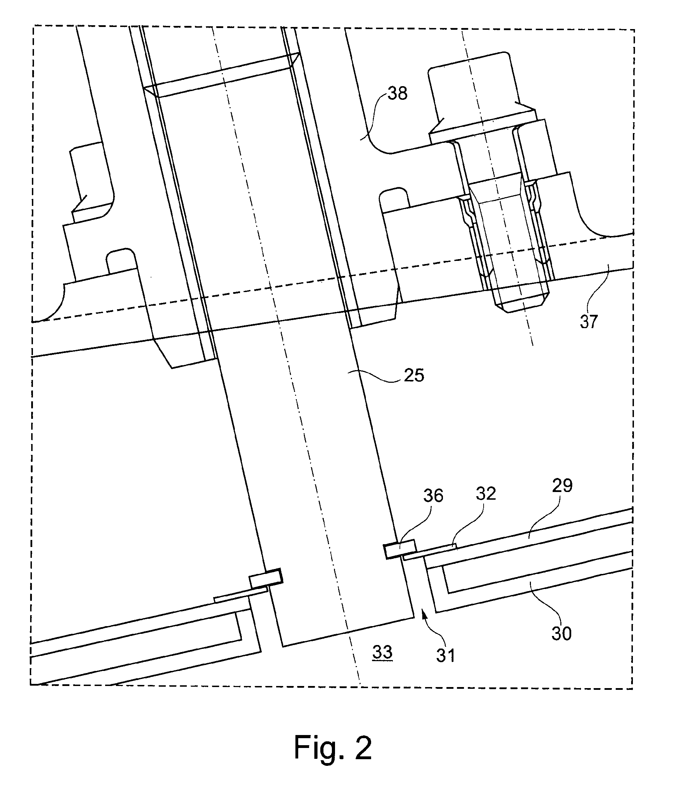

Die Fig. 2 bis 4 zeigen jeweils in schematischer Darstellung ein Brennkammergehäuse 37, an welchem ein Adapter 38 befestigt ist, um eine Zündkerze 25 zu lagern. Diese durchgreift durch eine Ausnehmung 31 eine äußere Brennkammerwand 29 sowie eine innere Brennkammerwand 30. Der Brennkammerinnenraum ist mit dem Bezugszeichen 33 bezeichnet.

An der Außenseite, abgewandt von dem Brennkammerinnenraum 33 liegt ein flacher, ringförmiger, flexibler Dichtring 32 gegen die äußere Brennkammerwand 29 an und wird durch den Druckunterschied zwischen der Außenseite und der Innenseite der Brennkammerwand 29, 30 in dichtende Anlage gebracht. Es versteht sich, dass Brennkammern als Ringbrennkammern oder Einzelbrennkammern rund ausgebildet sind, sodass sich keine ebene Fläche der äußeren Brennkammerwand 29 ergibt. Durch die flexible Ausgestaltung des Dichtrings 32 kann dieser jedoch um seinen gesamten Umfang dichtend anliegen.

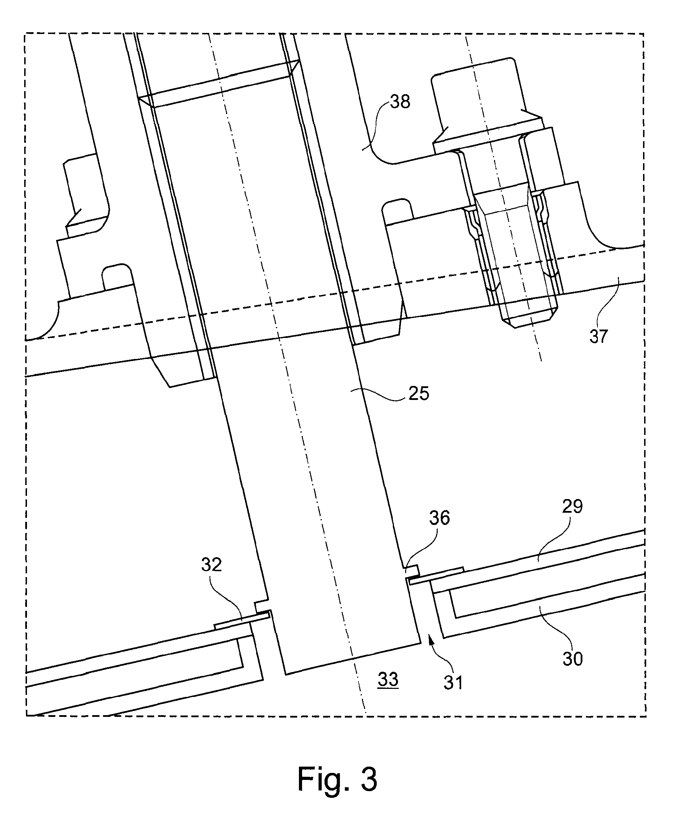

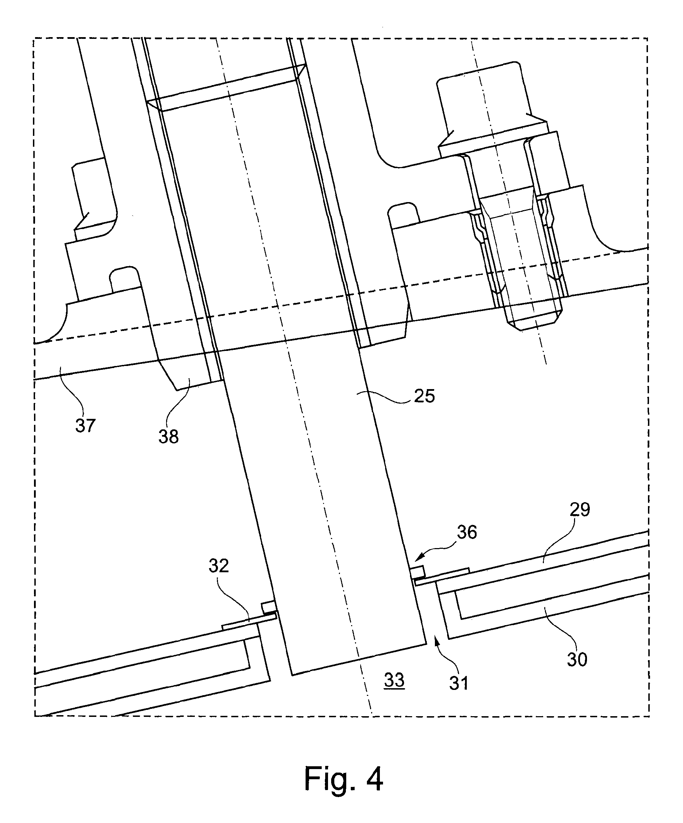

Um eine Sicherung des Dichtrings 32 im nicht in Betrieb befindlichen Zustand der Gasturbine sicherzustellen, weist das Ausführungsbeispiel der Fig. 2 ein Anlageelement 36 auf, welches beispielsweise in Form eines Sprengrings ausgebildet ist, welcher in eine Nut der Zündkerze 25 eingebracht ist. Alternativ hierzu ist es, wie in Fig. 3 dargestellt, möglich, an der Zündkerze 25 einen vorstehenden Ring oder Ähnliches vorzusehen, um das Anlageelement 36 zu bilden. Bei dem Ausführungsbeispiel der Fig. 4 ist das Anlageelement 36 angeschweißt, beispielsweise in Form von Teilstücken oder Segmenten, welche sich um den Umfang der Zündkerze 25 erstrecken.

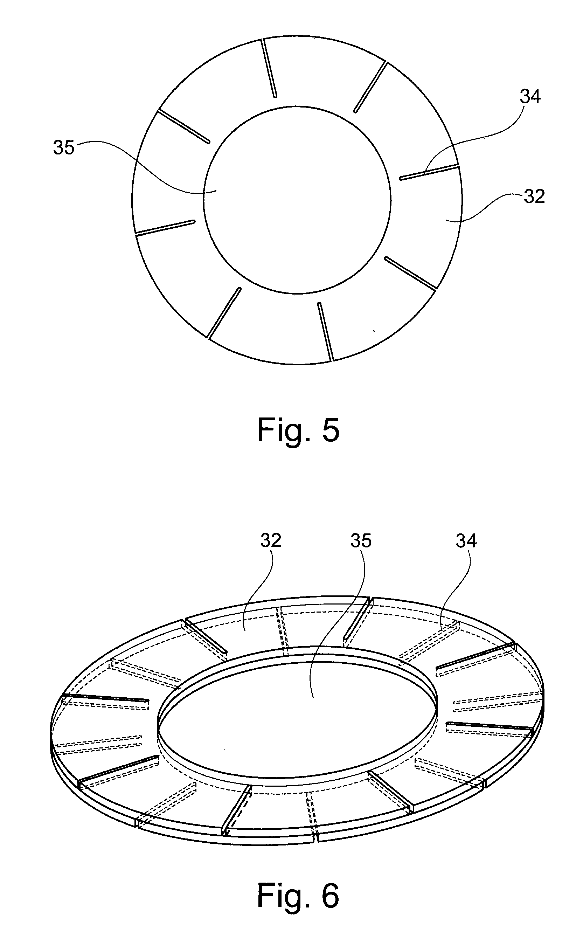

Die Fig. 5 zeigt eine Draufsicht auf den erfindungsgemäßen Dichtring. Dabei ist ersichtlich, dass dieser um seinen Umfang verteilt mit einer Vielzahl von Schlitzen 34 versehen ist, welche sich insbesondere am Randbereich des Dichtrings 32 erstrecken. Das Bezugszeichen 35 zeigt die mittige Ausnehmung des Dichtrings 32.

Die Fig. 6 zeigt eine Anordnung zweier Dichtringe übereinander, wobei ersichtlich ist, dass die einzelnen Schlitze 34 in Umfangsrichtung zueinander versetzt angeordnet sind, um die Abdichtung zu optimieren.

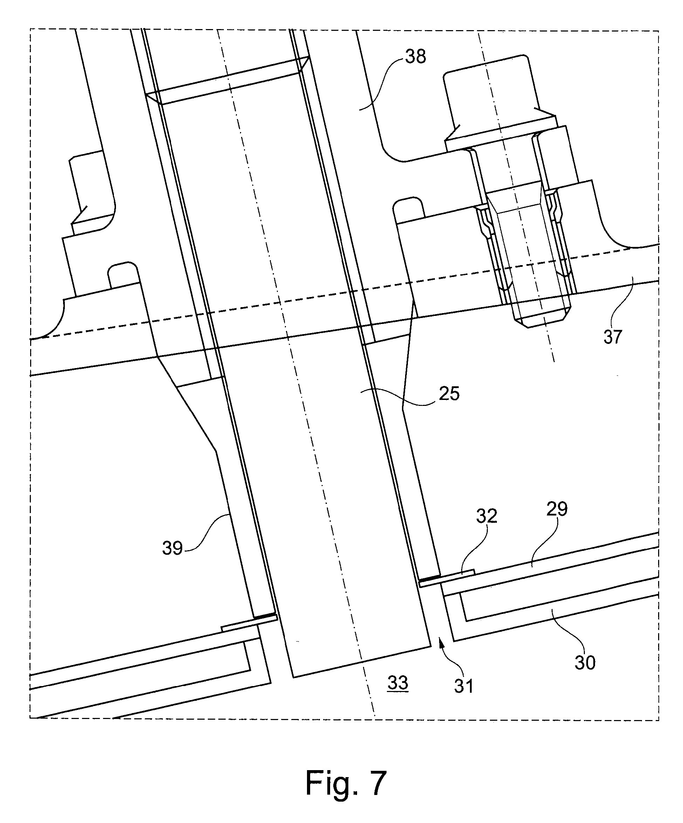

In Fig. 7 ist eine Ausgestaltungsvariante zu Fig. 2 gezeigt, bei welcher kein Anlageelement 36 in Form eines separaten Sprengrings erforderlich ist. Das Anlageelement wird durch einen verlängerten Adapter 39 gebildet, der den Dichtring 32 gegen ein Herabfallen sichert. Der Adapter 39 bei dem gezeigten Ausführungsbeispiel ist zwischen dem Zündkerzenadapter 38 und der Brennkammerwand 29 positioniert. Im Rahmen der Erfindung ist es auch möglich, dass der Adapter 38 der Zündkerze und der Adapter 39 zu einem Bauteil integriert sind, insbesondere dann, wenn der Abstand zwischen dem Brennkammergehäuse 37 und der äußeren Brennkammerwand 29 optimiert und/oder verringert wird.

### Bezugszeichenliste:

- 1: Triebwerksmittelachse
- 10: Gasturbinentriebwerk / Kerntriebwerk
- 11: Lufteinlass
- 12: Fan
- 13: Mitteldruckkompressor (Verdichter)
- 14: Hochdruckkompressor
- 15: Brennkammer
- 16: Hochdruckturbine
- 17: Mitteldruckturbine
- 18: Niederdruckturbine
- 19: Abgasdüse
- 20: Leitschaufeln
- 21: Kern-Triebwerksgehäuse
- 22: Kompressorlaufschaufeln
- 23: Leitschaufeln
- 24: Turbinenschaufeln
- 25: Zündkerze
- 26: Komressortrommel oder -Scheibe
- 27: Turbinenrotornabe
- 28: Auslasskonus
- 29: äußere Brennkammerwand
- 30: innere Brennkammerwand
- 31: Ausnehmung
- 32: Dichtring
- 33: Brennkammerinnenraum
- 34: Schlitz
- 35: mittige Ausnehmung
- 36: Anlageelement
- 37: Brennkammergehäuse
- 38: Adapter
- 39: Adapter

## Patentansprüche

1. Dichtungsanordnung einer Zündkerze (25) einer Brennkammer (15) einer Gasturbine, mit einer Zündkerze (25), welche durch eine Ausnehmung (31) einer Brennkammerwand (29, 30) angeordnet ist, mit zumindest einem Dichtring (32), durch welchen die Zündkerze (25) ragt und welche gegen einen dem Brennkammerinnenraum (33) abgewandten Randbereich der Ausnehmung (31) dichtend anliegt, **dadurch gekennzeichnet, dass** der Dichtring (32) in Form einer flachen, ringförmigen, flexiblen Scheibe ausgebildet ist.

2. Dichtungsanordnung nach Anspruch 1, **dadurch gekennzeichnet, dass** der Dichtring (32) mit radialen, bezogen auf seine mittige Ausnehmung (35) zur Durchführung der Zündkerze (25), Schlitzen (34) versehen ist.

3. Dichtungsanordnung nach Anspruch 1 oder 2, **dadurch gekennzeichnet, dass** der Dichtring (32) als Blechbauteil ausgebildet ist.

4. Dichtungsanordnung nach einem der Ansprüche 1 bis 3, **dadurch gekennzeichnet, dass** mehrere Dichtringe (32) übereinanderliegend vorgesehen sind.

5. Dichtungsanordnung nach Anspruch 4, **dadurch gekennzeichnet, dass** die mehrere Dichtringe (32) miteinander verbunden sind.

6. Dichtungsanordnung nach Anspruch 5, **dadurch gekennzeichnet, dass** die Schlitze (34) der mehreren Dichtringe (32) zueinander versetzt angeordnet sind.

7. Dichtungsanordnung nach einem der Ansprüche 1 bis 6, **dadurch gekennzeichnet, dass** die Zündkerze (25) mit zumindest einem den Dichtring (32) abstützenden Anlageelement (36) versehen ist.

8. Dichtungsanordnung nach Anspruch 7, **dadurch gekennzeichnet, dass** das Anlageelement (36) in Form eines Sicherungsrings ausgebildet ist.

9. Dichtungsanordnung nach Anspruch 7, **dadurch gekennzeichnet, dass** das Anlageelement (36) in Form eines ringförmigen, an der Zündkerze ausgebildeten Ansatzes ausgebildet ist.

10. Dichtungsanordnung nach Anspruch 7, **dadurch gekennzeichnet, dass** das Anlageelement in Form eines die Zündkerze (25) umschließenden, zwischen dem Zündkerzenadapter (38) und der Brennkammerwand (29) positionierten Adapters (38) ausgebildet ist.
